Europäisches Patentamt

European Patent Office

Office européen des brevets

(11) Publication number: **0 076 934**
**B1**

(12) EUROPEAN PATENT SPECIFICATION

(45) Date of publication of patent specification: **02.01.86**

(21) Application number: **82108558.6**

(22) Date of filing: **16.09.82**

(51) Int. Cl.⁴: **B 62 D 29/04,** B 62 D 65/00

(54) **A process for making the body of a vehicle utilising outer cladding elements made of synthetic plastics resins.**

(30) Priority: **06.10.81 IT 6829281**

(43) Date of publication of application:
**20.04.83 Bulletin 83/16**

(45) Publication of the grant of the patent:
**02.01.86 Bulletin 86/01**

(84) Designated Contracting States:
**DE FR GB SE**

(56) References cited:
**DE-A-1 504 833**
**DE-A-1 755 319**
**DE-A-2 854 766**
**DE-A-2 923 874**
**FR-A-1 117 391**
**FR-A-1 419 482**
**FR-A-2 093 943**
**FR-A-2 213 844**
**FR-A-2 227 886**
**FR-A-2 403 259**
**GB-A-1 015 241**
**GB-A-1 237 615**
**US-A-2 587 142**
**US-A-2 973 220**
**US-A-3 100 458**
**US-A-3 551 014**
**US-A-3 629 968**
**US-A-3 686 051**

(73) Proprietor: **FIAT AUTO S.p.A.**
**Corso Giovanni Agnelli 200**
**I-10135 Torino (IT)**

(72) Inventor: **Capello, Franco**
**Piazza Guala, 134 Bis**
**I-10100 Torino (IT)**
Inventor: **Mantegazza, Franco**
**Via Lamarmora, 39**
**I-10100 Torino (IT)**

(74) Representative: **Bongiovanni, Guido et al**
**c/o Ingg. Carlo e Mario Torta Via Viotti 9**
**I-10121 Torino (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Description

The present invention relates to a process for making the body of a vehicle utilising outer cladding elements made of synthetic plastic resins. In particular the present invention relates to a process which further utilises a monolithic lattice support structure constructed of sheet steel.

It is known that the current energy problems are causing vehicle manufacturers to develop relatively light vehicles to reduce the fuel consumption. One of the most efficient systems for reducing the weight of current motor vehicles is that of replacing the present sheet steel bodies with bodies made of plastics resins. Several motor vehicles of this type are known, in which, onto a metal framework provided with all the mechanical members there is mounted a vehicle body of moulded plastics material, usually fibreglass. The body is self supporting, and except for the movable elements (bonnet, doors, tail gate) is obtained by means of a single moulding operation.

The solution described has many serious disadvantages both of a constructional nature and for the user. In particular, the necessity of obtaining a self supporting cladding structure (bodywork) which can be mounted on the mechanical frame makes it necessary, because of the limitations of current technology, to mould the structure in a single unit and with costly materials (fibreglass type) by a process already widely tried and tested in the field of small boats. This involves very high manufacturing costs both because of the materials and above all because of the costs of the moulding machinery, which must be of large dimensions. Moreover, this process is slow and therefore, for the present, technically unsuitable for mass production runs. The fibreglass structures are, moreover, relatively rigid and therefore do not lend themselves to very much deformation to absorb the energy of a possible collision. Therefore vehicles with known plastics resin bodies are not totally secure for the passengers.

Finally, in the case of localised impacts the repairs are very difficult to perform since the body is not made from removable and replaceable elements apart from the movable elements (doors, bonnet etc.).

The object of the present invention is that of providing a process for making the bodywork of a vehicle body utilising external cladding elements of synthetic plastics resins and a monolithic lattice support structure of sheet steel, in such a way as to provide a body free from the described disadvantages.

A further object of the present invention is that of providing a process of the above mentioned type which can be performed simply and rapidly and which does not require expensive moulding equipment, in such a way as to be able effectively to be utilised for mass production.

The said objects are achieved by the present invention in that it relates to a process for making the outer cladding of the body of a motor vehicle utilising outer cladding elements made of synthetic plastics resins and a monolithic lattice support structure made from sheet steel and comprising closed lateral frames joined together by crosspieces, characterised by the fact that it comprises:

— a first stage in which a first plurality of the said cladding elements are assembled together and joined by fixing means able to render the said elements rigidly connected together and to seal the junctions between these to form self supporting assemblies which can be fixed to the said support structure;

— a second stage, comprising a plurality of successive operations in which the said self supporting assemblies and a second plurality of the said cladding elements are fixed on the support structure by mechanical connection elements, sealing adhesive plastics substances being disposed along the junctions between the said elements; and

— a third stage for fixing a synthetic plastics resin roof panel into an upper opening in the said support structure by means of a string of an adhesive plastics substance disposed on a rim of the said support structure delimiting this opening, the said substance being able to elastically join the said roof panel to the said support structure to allow substantially independent movements thereof; the said adhesive plastics substance being constituted by two-component adhesives which polymerise at ambient temperature, and at least some of the said outer cladding elements being constituted by sheets of composite material (SMC).

For a better understanding of the present invention there is now given a non limitative description of an exemplary embodiment thereof with reference to the attached drawings, in which:

Figure 1 illustrates a block schematic diagram of a cladding process for a motor vehicle body formed according to the principles of the present invention;

Figure 2 is an exploded view of a detail of a vehicle body formed with the process of the present invention;

Figures 3, 4 and 5 schematically illustrate partial exploded views of a vehicle body at the beginning of successive operations in the process of the invention;

Figure 6 schematically illustrates a stage in the process of the invention; and

Figure 7 schematically illustrates several sections of a body formed with the process of the invention.

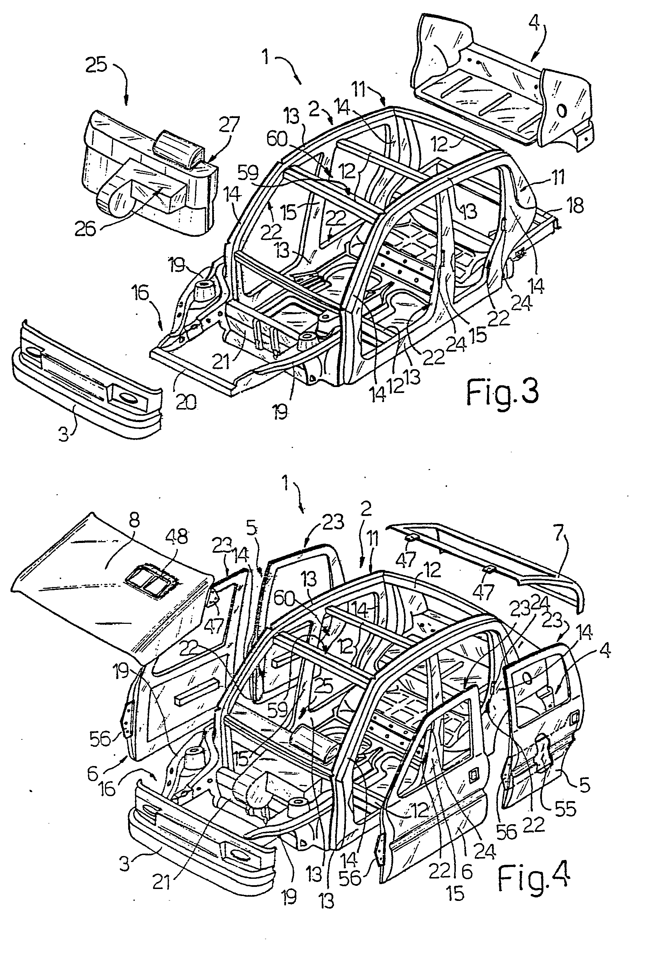

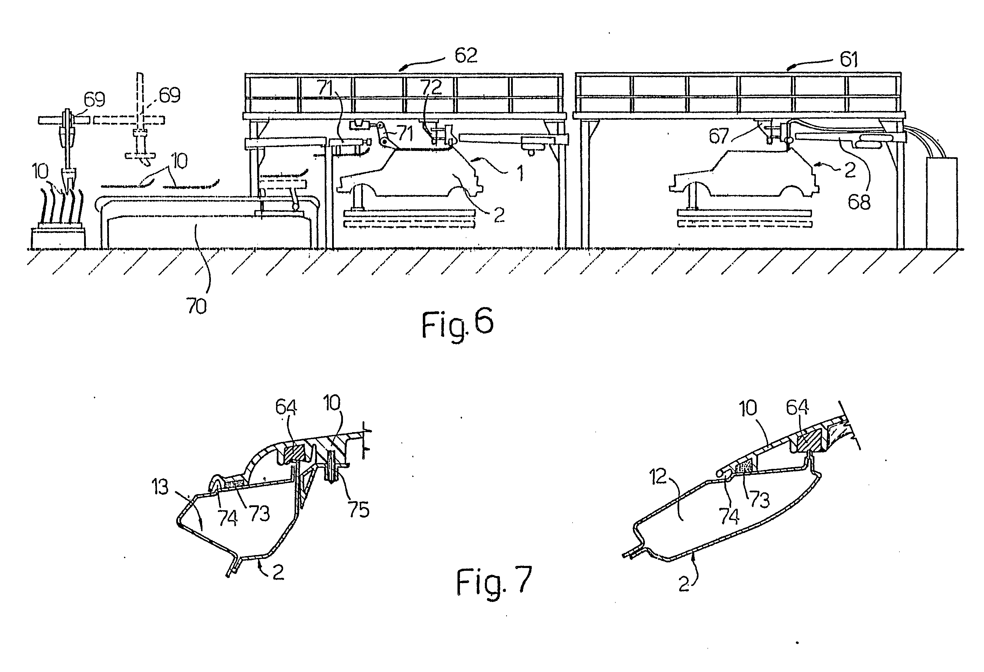

With reference to Figure 5 there is generally indicated by the reference numeral 1 a body of a motor vehicle comprising a support structure 2 made of sheet metal and clad with a plurality of elements made of synthetic plastics resin and comprising a front endpiece 3, a rear endpiece 4, front and rear side doors 5 and 6, a tailgate 7 and a bonnet 8 at the front, front wings 9 and an upper roof panel 10. With reference also to Figures 3 and 4 which illustrate two different assembly stages of the body 1, the support structure 2 is a monolithic rigid lattice structure and comprises two closed lateral frames 11 joined together by crosspieces 12. Each frame 11 includes two horizontal longerons 13 joined by two lateral struts 14 and a central column 15. The structure 2 is made of pressed sheet steel and spot welded electrically. The structure 2 further has a front frame element 16 and a rear frame element 18 provided with holes, brackets and other supports for mechanical connection members. The element 16 includes two longerons 19 parallel to the longerons 13 and rigidly connected to the frame 11 and two crosspieces 20 and 21. The crosspiece 21 is able to support an engine and the associated mechanical members, whilst the longerons 19 have curved facing surfaces and forwardly tapering spaces and are able to serve as supports for the front suspensions of the vehicle of which the body 1 forms part. Similarly, the rear struts 14 are able to support the rear suspensions of the said vehicle. The frames 11 are finally provided with continuous support surfaces 22 for the doors 5 and 6, which can serve as abutments for respective peripheral edges 23 of the doors 5 and 6 and to make a seal with these, and support seats 24 for the closure members of the doors 5 and 6.

The separation between the engine space, delimited by the element 16, and the passenger compartment, delimited by the frames 11, is obtained in part by means of the crosspiece 21, which defines a substantially vertical lower separating bulk head, and in part by means of a self-supporting separation assembly 25 which is mounted on the structure 2 parallel to and above the crosspiece 21. The assembly 25 comprises a first element 26 of plastics material provided with means for fixing it to the structure 2 (for example brackets) and a second element 27 facing the passenger compartment and made of plastics material. The elements 26 and 27 are provided with walls and recesses suitable for constituting the casings for the parts of the ventilation system of the vehicle of which the body 1 forms part. Further, the element 27 can constitute the dashboard of the said vehicle.

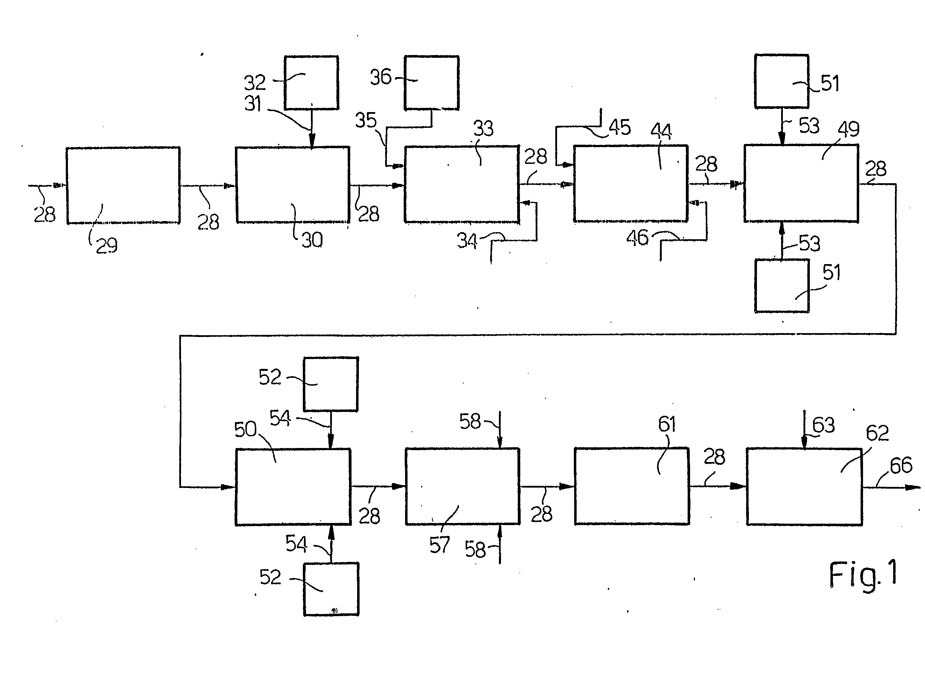

The body 1 is produced starting from the structure 2 and a plurality of different plastics material elements independence on the different functions which they must fulfil, by a process illustrated schematically in Figure 1 in which the rectangles represent working stations in the bodywork production lines, at which the operations of the process are performed, and the lines represent the streams of elements transported by suitable conveyors.

With reference to Figure 1 the structure 2, which is made on a different, possibly automated, production line by means of known techniques involving spot welding robots, are supplied in a stream 28 to a first station 29 at which is performed a positioning operation in which the structure 1 is positioned on a platform equipped with suitable references and abutments, in such a way that the subsequent operations can be performed in an automatic manner. From the station 29 the stream 28 of structures 2, which are arranged transversely with respect to the direction of advance of the stream 28, is supplied to a station 30 at which the mounting of the separator assembly 25, by means of a manual and/or an automatic operation is performed. A stream 31 of separator assemblies 25 arrives at the station 30, the separator assemblies 31 are preassembled at a side station 32 of a separate bodywork line. At the station 32 the elements 26 and 27 which are made of a moulded polyoxyphenylene resin (NORIL) possibly reinforced with a suitable filler (for example glass fibres) are fixed rigidly together by means of an adhesive substance which can join the two elements 26 and 27 rigidly together and is able to contribute to the rigidity of the assembly 25 and to seal the junction between the elements themselves. An adhesive substance having such characteristics will hereinafter be defined as a "structural adhesive".

Polyurethanes are particularly suitable structural adhesives, particularly those having thixotropic (non-drip) characteristics and a means viscosity lying between 100,000 and 300,000 centipoise, which ensures a minimum immediate adherence between the parts which are secure together. Notwithstanding this the surfaces to be joined must be prepared by means of cleaning with organic solvents (acetone or methylene chloride) and rubbed down with emery cloth and/or by the application of adhesion promoters (primers) having synthetic bases (for example an isocyanate base). Moreover after the parts have been brought together a critical time, of around 10—15 minutes must be allowed to pass, during which the assembly which is held together by adhesive must not be moved. Therefore, after the gluing stage there must be disposed an accumulation zone for at leas 15—20 workpieces which can be possibly warmed to a low temperature (around 80°C) to accelerate the hardening of the adhesive.

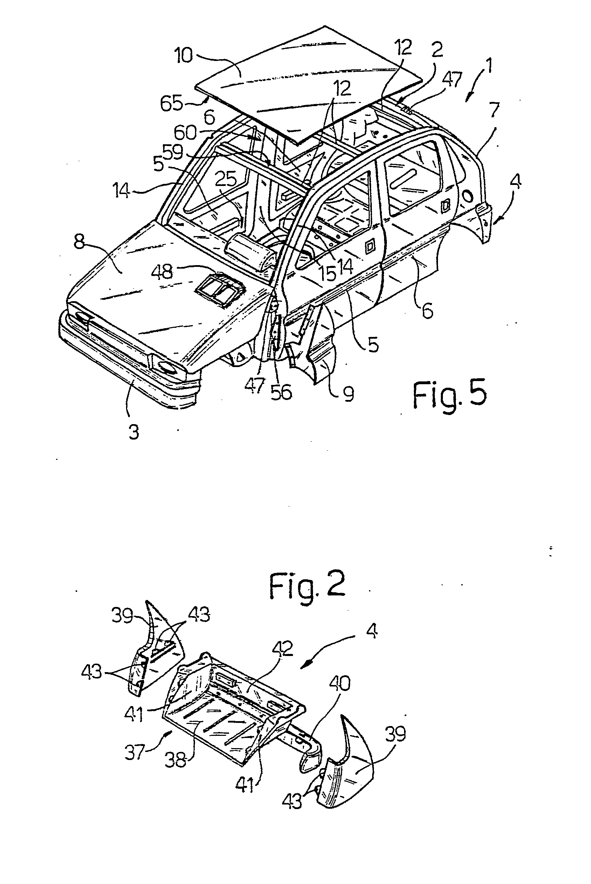

The stream 28 of structures 2 is then supplied to a station 33 at which also arrives a flow 34 of front end pieces 3 which are integrally moulded of suitable plastics resin, for example ABS (acrylonitrile-butadiene-styrene) and a stream 35 of rear endpieces 4, which are assembled starting from different individual elements at a station 36 of a separate bodywork line. With reference to Figure 2, each rear endpieces 4 includes a generally cup-shape element 37 having a substantially rectangular base 38 which delimits a baggage space, two sides or rear wings 39 and a bumper element 40. The element 37 is made by moulding a composite foamed material or of polycarbonate and rests on the frame element 18. The element 37 has a platform constituted by the base 38, two inner lateral sides 41 and a rear bottom wall 42. The bumper element 40 is made in one piece by moulding a suitable resin, for example ABS, and is fixed at the rear against the wall 42. The rear wings 39 are made by moulding in a polyester resin and are fixed laterally outside the inner sides 41.

The elements 38, 39 and 40 are positioned and fixed together at the station 36 by adhesive and/or by mechanical connection elements such as screws or rivets. If the elements 38, 39 and 40 are to be held together solely by adhesive then a polyurethane structural adhesive is used, which is applied by extrusion onto surfaces preliminarily prepared as previously mentioned, with adhesion promoters. To ensure an immediate fixing of the various elements, sufficient to perform all the necessary adhesive operations with relative security, points on the surfaces to be glued have a rapid-acting adhesive applied to them suitable for ensuring an almost instantaneous connection. Once the gluing operations are terminated the assembly 4 is left for about 10 to 20 minutes and then it can be moved.

To accelerate and simplify the assembly operations for the element 4, the elements 38, 39 and 40 can be fixed by means of screws housed in suitable seats 43, which ensure the structural connecton between the various elements. In this case the element 37 is preferably made of a composite foam material (SMC = sheet moulding compound) and seals, not illustrated, are interposed between the elements of the assembly 4. The junctions between the various elements are further sealed by means of elastic sealing adhesive substances which allow almost independent movements between the various elements, made from a polysulphide base (for example thioprene). Such substances, hereinafter defined only as "sealing adhesives" include thixotropic liquid rubbers which can vulcanise at ambient temperature and have a mean viscosity of 470.000 centipoise, can ensure a minimum of immediate adhesion of the elements. Naturally it is possible to adopt a mixed fixing process, partly using structural adhesives and partly using screws and sealing adhesives. At the station 33 the endpieces 3 and 4 are fixed to the structure 2 by screwing. The station 33 is completely automatic and the endpieces 3 and 4 are supplied by means of conveyor belts provided with abutments and automatic positioners, which cooperate with the abutments of the platform on which the structure 2 is mounted. The screwing is performed by means of automatic self-aligning screwing devices controlled, for example, by suitable robots and acting in two phases, one for obtaining a preliminary fixing and one for obtaining a definitive fixing.

Following this the stream 28 of structures 2, which have the aspect illustrated in Figure 4, is supplied to a station 44, to which there are also supplied streams 45 and 46 of bonnets 8 and tailgates 7 respectively, which are each made in one piece by moulding a foamed polyester resin and a polyester resin respectively, and are provided with hinges 47 and metal locks fixed by means of screws and/or polyurethane structural adhesives. At the station 44 the bonnet 8 and the tailgate 7 are positioned on the structure 2 and the associated hinges are screwed to this latter by means of automatic screwing machines. The bonnets 8 are provided with air intakes 48 of polyester, which have been previously secured to them by adhesive using polyurethane structural adhesives. Then the structures 2 are sent on to subsequent stations 49 and 50 where mounting of the front and rear doors 5 and 6 respectively is performed. The doors 5 and 6 are preliminarily assembled on separate bodywork lines at two stations 51 and two stations 52 and are supplied to the respective stations 49 and 50 by means of side lines 53 and 54. The doors 5 and 6 are made at the stations 51 and 52 starting from pairs of moulded polyester resin panels which are disposed facing one another and glued together along the edges 23 by means of polyurethane structural adhesives. A metal crosspiece 55 (Figure 4) is interposed between each pair of facing panels before gluing, the crosspiece 55 carrying a window winder device, not illustrated, and hinges 56 for the doors 5 and 6 screwed thereto as well as lock devices for the doors themselves. The crosspieces 55 are fixed mechanically to one of the panels by means of connection members. As an alternative to gluing, the facing panels of each door 5 and 6 can be fixed together by means of microwave welding by interposing between them a special synthetic film and then making the assembled door pass through a microwave oven. When adhesives are used the surfaces to be joined must be prepared as previously described.

Since the structures 2 advance transversely, a rotation of each structure 2 to dispose it parallel to the sense of advancement is required in order to mount the doors 5 and 6. This rotation is effected at the station 49, whilst at a subsequent station 57 the structures 1, which appear as illustrated in Figure 5, are again rotated transversely to the direction of advance. Two streams 58 of front wings 9 arrive at the station 57, these front wings are moulded in one piece from a polyester resin and are fixed to the structure 2 by screwing to the longerons 19.

At this point the bodies 1 are almost complete, needing only the roof panel 10 which is moulded in one piece from a foam polyester resin or from a composite material reinforced with a filler of mineral fibres (SMC) and which is fixed directly to an edge 59 of the structure 2 delimiting an upper opening 60 thereof, by means of gluing with polysulphide sealing adhesives.

From the station 57 the stream 28 of partially clad structures 2 is supplied to a station 61 where there is deposited on the edge 59, by extrusion, first a continuous bead of an adhesion promoter (primer) and then a continuous bead of a polysulphide based sealing adhesive. Then there is applied, to points on the edge 59, a rapid-acting adhesive (1—5 minutes required for hardening) at those points of the perimeter of the opening 60 which are most greatly stressed. Finally the structures 2 are supplied to a station 62 where a stream 63 of roof panels 10 having a perimetral seal 64 (Figure 7) arrives. Following this, at the station 62, the roof panels 10 are positioned onto the structure 2 and one of their surfaces 65 is positioned in contact, with a predetermined pressure, against the bead of sealing adhesive. The points of rapid-acting adhesive ensure the temporary fixing, whilst the sealing adhesive cross links cold ensuring a satisfactory fixing of the roof panel 10 in a time lying between several tens of minutes and several hours. From the station 62 a stream 66 of bodies 1 leaves, which can then be subjected to a baking step at a relatively low predetermined temperature (80°C) to accelerate the hardening of the adhesive. During all the operations described, moreover, the junctions between the various elements are sealed by means of a sealing adhesive.

The stations 61 and 62 are schematically illustrated in Figure 6. The adhesives and the adhesion promoters are applied by means of a nozzle 67 mounted on an articulated arm 68 which is movable along the perimeter of the opening 60. The adhesives used are all of the two-component type which can polymerise and harden at ambient temperature (cold hardening). With suitable means the adhesives, which are mixed by the nozzle 67, can be maintained in the fluid state for several hours so that even in the case of closure of the system they do not harden within the distributor nozzle. The station 62 is provided with an arm 69 which withdraws the roof panels 10 and positions them on a conveyor 70, and arms 71 and 72 which withdraw each roof panel 10 from the conveyor 70 and mount it on the structure 2 pressing it against the structure with a predetermined pressure. The roof panel 10 (Figure 7) is provided with a small channel 73 for containing the adhesive and an outer channel 74 for preventing this from escaping to the outside. Further the structures 2 are provided with reference pins 75 for exactly positioning the roof panel 10. The seal 64 ensures a water tight and dust tight seal in every case.

From what has been described the advantages of the present invention will be apparent. It allows a relatively light vehicle to be constructed thanks to the plastics cladding, but the vehicle has a metal support structure capable of absorbing the energy of impacts. Moreover it allows the outer cladding to be made of relatively small elements which can easily and rapidly be moulded, and which are easily and simply assembled and dismantled, thereby simplifying both the construction and possible repair of the bodywork of the vehicle. The application of sealing adhesives on the elements mounted mechanically allows the structure to be reinforced whilst at the same time avoiding the infiltration of water and/or dust and the assembly of several elements on separate bodywork lines allows a simpler and more rapid working.

**Claims**

1. A process for making the body (1) of a vehicle utilising outer cladding elements made of synthetic plastics resins and a monolithic lattice support structure (2) made of sheet metal and including closed side frames (11) joined together by crosspieces (12), comprising:

— a first stage in which a first plurality (26, 27, 37, 39, 40) of the said cladding elements are assembled and fixed together by fixing means operable to render the said elements (26, 27, 37, 39, 40) rigidly connected together and to seal the junctions between these two form self-supporting assemblies (4, 5, 6, 25) which can be fixed to the said support structure (2);

— a second stage comprising a plurality of successive operations in which the said self-supporting assemblies (4, 5, 6, 25) and a second plurality (3, 7, 8, 9) of the said cladding elements are fixed onto the said support structure (2) by mechanical connection means, sealing adhesive plastics substances being disposed along the junctions between the said elements; and

— a third stage in which a roof panel (10) of synthetic plastics resin is fixed over an upper opening (60) in the said support structure (2) by means of a bead of adhesive plastics substance disposed along an edge (59) of the said support structure (2) delimiting the said opening (60), the said substance being operable to join the said roof panel (10) elastically to the said support structure (2) to allow almost independent movement thereof;

the said plastics substances being constituted by two-component adhesives which can polymerise at ambient temperature, and at least some of the said outer cladding elements being constituted by sheets of composite material (SMC).

2. A process according to Claim 1, characterised by the fact that in the said first stage side doors (5, 6) for the said body (1) of the said vehicle, and a self-supporting assembly (25) serving as a separator between the passenger compartment and the engine compartment of the vehicle are made on separate bodywork lines, the said self-supporting assembly (25) comprising a first element (26) of plastics material provided with fixing means for fixing it to the said support structure and a second plastics material element (27) fixed to the first by means of a polyurethane adhesive, the said first (26) and second (27) element being provided with walls and seats constituting the casing for the parts of the ventilation system of the vehicle; each said door (5, 6) comprising a pair of facing plastics material panels between which there is disposed a metal crosspiece (55) carrying a window winder mechanism, the said crosspiece being fixed by mechanical members to one of the said panels, these latter then being fixed together around their perimetral edge (23) by means of a polyurethane adhesive, and a hinge (56) being screwed to the crosspiece (55).

3. A process according to Claim 2, characterised by the fact that the said first and second elements (26, 27) are moulded from a polyoxyphenylene (NORIL), the said panels being moulded from a polyester resin, the said polyurethane adhesive being applied by means of extrusion on to surfaces rubbed down by means of abrasive cloth and cleaned with organic solvents and/or prepared by means of the application of adhesion promoters (primer).

4. A process according to any preceding Claim, characterised by the fact that during the said first stage, and on a separate bodywork line, there is made a rear endpiece (4) for the said vehicle, comprising a cup-shape element (37) having a substantially rectangular base and made of polycarbonate to delimit a baggage space for the said vehicle, two lateral side wings (39) made of a polyester resin and a rear bumper (40) the said elements (37, 39, 40) being joined together by means of a continuous bead of a polyurethane adhesive applied by extrusion onto surfaces cleaned with organic solvents and prepared by means of the application of adhesion promoters, a rapid-acting adhesive being applied at points over the said surfaces to provide a tacking connection between said elements (37, 39, 40) in a relatively short time.

5. A process according to any of Claims 1 to 3, characterised by the fact that during the said first stage a rear endpiece (4) of the said vehicle, comprising a cup-shape element (37) having a substantially rectangular base is made from a composite foamed material such as to delimit a baggage space for the said vehicle, two lateral rear side wings (39) made of a polyester resin and a rear bumper element (40), seals being interposed between the said elements (37, 39, 40) and the said elements (37, 39, 40) being joined together by screws, the junctions between the various elements being subsequently sealed by means of a polysulphide based sealing resin.

6. A process according to any of the preceding Claims, characterised by the fact that the said second stage comprises the following operations in succession:

— positioning the said support structure (2) on a tool platform equipped with suitable references and abutments;

— mounting the said support assembly (25) serving as a separation between the passenger compartment and the engine compartment of the vehicle;

— mounting a front bumper endpiece (3) and a rear endpiece (4) of the said vehicle by means of an automatic station (33) provided with automatic screwing machines, to which the said endpieces (3, 4) are supplied by means of automatic conveyors and positioners;

— mounting onto the said support structure (2) a front bonnet (8) and a rear tailgate (7) of the said vehicle, made of foamed polyester and a polyester resin respectively, the said bonnet (8) and the tailgate (7) being previously provided, respectively, with an air intake (48) fixed to the said bonnet (8) by means of polyurethane adhesives, and hinges (47) which are screwed to the said support structure (2) by automatic screwing machines;

— rotation of the said tool platform and mounting by screw means of side doors, respectively rear doors (5) and front doors (6) in succession, the said support structure (2) being provided on the side frames (11) with continuous support surfaces (22) which constitute abutments for peripheral edges (23) of the said doors (5, 6) and which seal therewith:

— rotation of the said tool platform and mounting by screwing of front wings (9) for the said vehicle, the front wings being made of a polyester resin.

7. A process according to any preceding Claim, characterised by the fact that the said third stage includes the following operations;

— mounting a perimetral seal (64) onto the said roof panel (10) made by moulding a foamed polyester resin;

— preparation of a surface of the said edge (59) of the said support structure (2) facing the said roof panel (10) by extruding a continuous bead of an adhesion promoter (primer) from a nozzle (67) mounted on an articulated arm (68) movable over the perimeter of the said opening (60);

— extrusion of a continuous bead of a sealing adhesive substance based on polysulphide onto the said surface of the said edge (59) by means of a nozzle (67) mounted on an articulated arm (68) movable over the perimeter of the said opening (60);

— application of spots of a rapid-acting adhesive substance onto the most greatly stressed points of the perimeter of the said opening;

— mounting the said roof panel (10) onto the said support structure (2), a surface (65) of the said roof panel (10) facing the said opening being placed in contact with the said continuous bead of adhesive substance and pressed against it with a predetermined pressure;

— heating of the body (1) to a relatively low predetermined temperature to accelerate the polymerisation and cross linking of the said adhesive substance.

8. A process according to any preceding Claim, characterised by the fact that the said roof panel (10) is made from a material of the composite type reinforced with mineral fibres (SMC).

9. A process according to Claim 1, characterised by the fact that the said self-supporting assemblies (5, 6) include elements fixed together by microwave welding.

## Revendications

1. Procédé pour fabriquer la carrosserie (1) d'un véhicule en utilisant des éléments d'habillage extérieur fabriqués en résines plastiques synthétiques et une structure support en treillis monolithique (2) fabriquée en tôle métallique et comportant des cadres latéraux fermés (11) reliés ensemble par des traverses (12), caractérisé en ce qu'il comporte:

— un premier stade dans lequel on assemble et on fixe ensemble une première multiplicité (26, 27, 37, 39, 40) de ces éléments d'habillage par des moyens de fixation servant à rendre ces éléments (26, 27, 37, 39, 40) rigidement solidaires les uns des autres et étanches les jonctions entre ces éléments pour former des ensembles auto-portants (4, 5, 6, 25) qui peuvent être fixés sur cette structure support (2);

— un deuxième stade comportant une multiplicité d'opérations successives, dans lesquelles on fixe les ensembles auto-portants (4, 5, 6, 25) et une deuxième multiplicité (3, 7, 8, 9) de ces éléments d'habillage sur la structure support (2) par des moyens de liaison mécanique, des substances plastiques adhésives d'étanchéité étant disposées le long des jonctions entre ces éléments; et

— troisième stade dans lequel on fixe un panneau de toit (10) en résine plastique synthétique dans une ouverture supérieure (60) de la structure support (2) au moyen d'un cordon de substance plastique adhésive disposé sur un rebord (59) de cette structure support (2) délimitant cette ouverture (60), cette substance servant à lier élastiquement le panneau de toit (10) à la structure support (2) pour lui permettre des mouvements presque indépendants;

ces substances plastiques étant constituées par des adhésifs à deux composants qui peuvent polymériser à température ambiante, au moins certains des éléments d'habillage extérieur étant constitués par des feuilles de matériau composite.

2. Procédé selon la revendication 1, caractérisé en ce que, dans le premier stade, des portes latérales (5, 6) pour la carrosserie (1) du véhicule et un ensemble auto-porteur (25) servant de cloison de séparation entre le compartiment passagers et le compartiment moteur du véhicule sont fabriqués sur des lignes de carrosserie séparées, l'ensemble auto-porteur (25) comportant un premier élément (26) en matière plastique équipé de moyens de fixation pour le fixer sur la structure support et un deuxième élément en matière plastique (27) fixé sur le premier élément par un adhésif à base de polyuréthane, le premier élément (26) et le deuxième élément (27) étant pourvus de parois et de sièges constituant des logements pour des parties du système de ventilation du véhicule, chaque porte (5, 6) comportant une paire de panneaux en matière plastique en vis-à-vis entre lesquels est disposée une traverse métallique (55) portant un mécanisme lève-vitre, cette traverse étant fixée par des éléments mécaniques sur l'un des panneaux, ces panneaux étant ensuite fixés l'un sur l'autre autour de leurs bords périphériques (23) au moyen d'un adhésif à base de polyuréthane, une charnière (56) étant vissée sur la traverse (55).

3. Procédé selon la revendication 2, caractérisé en ce que le premier et le deuxième élément (26, 27) sont moulés à partir d'un polyoxyphénilène (NORIL), les panneaux étant moulés à partir d'une résine polyester, l'adhésif à base de polyuréthane étant appliqué par extrusion sur des surfaces frottées avec un tissu abrasif et nettoyées par des solvants organiques et/ou préparées par application de promoteurs d'adhérence (couche primaire).

4. Procédé selon l'une quelconque des revendications précédentes, caractérisé en ce que, pendant le premier stade, et sur une chaîne de carrosserie séparée, on fabrique une pièce terminale arrière (4) pour le véhicule, comportant un élément en forme de cuvette (37) ayant une base pratiquement rectangulaire en polycarbonate pour délimiter un volume de bagages pour le véhicule, deux ailes latérales (39) fabriquées en résine polyester, et un pare-chocs arrière (40), ces éléments (37, 39, 40) étant reliés ensemble par un cordon continu d'un adhésif à base de polyuréthane appliqué par extrusion sur des surfaces nettoyées par des solvants organiques et préparées par application de promoteurs d'adhérence, un adhésif à prise rapide étant appliqué en des points sur ces surfaces pour procurer une liaison provisoire entre ces éléments (37, 39, 40) en un temps relativement court.

5. Procédé selon l'une quelconque des revendications 1 à 3, caractérisé en ce que, pendant le premier stade, on fabrique une pièce terminale arrière (4) du véhicule, comportant un élément en forme de cuvette (37) ayant une base sensiblement rectangulaire à partir d'un matériau composite en mousse de façon à délimiter un volume de bagages pour le véhicule, deux ailes latérales arrière (39) fabriquées en résine polyester et un pare-chocs arrière (40), des joints d'étanchéité étant interposés entre ces éléments (37, 39, 40), et les éléments (37, 39, 40) étant reliés ensemble par des vis, les jonctions entre les divers éléments étant ultérieurement rendues étanches par une résine d'étanchéité à base de polysulfures.

6. Procédé selon l'une quelconque des revendications précédentes, caractérisé en ce que le deuxième stade comporte les opérations suivantes, en séquence:

— positionner la structure support (2) sur une plate-forme outil équipée de repères et de butées appropriés;

— monter l'ensemble support (25) servant de cloison de séparation entre le compartiment passagers et le compartiment moteur du véhicule;

— monter une pièce terminale servant de pare-chocs avant (3) et une pièce terminale arrière (4) du véhicule dans un poste automatisé (33) équipé de machines de vissage automatiques, auquel ces pièces terminales (3, 4) sont amenées au moyen de convoyeurs et de positionneurs automatiques;

— monter sur cette structure support (2) un capot avant (8) et un hayon arrière (7) du véhicule, fabriqués respectivement en mousse de polyester et en résine polyester, le capot (8) et le hayon (7) étant préalablement équipés respectivement d'une entrée d'air (48) fixée sur le capot (8) au moyen d'adhésifs à base de polyuréthane et de charnières (47) qui sont vissées sur la structure support (2) par des machines de vissage automatiques;

— faire tourner la plate-forme outil et monter par des moyens de vissage les portes latérales, respectivement les portes arrière (5) et les portes avant (6) en séquence, la structure support (2) étant équipée sur les cadres latéraux (11) de surfaces supports continues (22) qui constituent des butées pour les bords périphériques (23) de ces portes (5, 6) et qui font étanchéité avec eux;

— faire tourner la plate-forme outil et monter par vissage les ailes avant (9) du véhicule, ces ailes étant fabriquées en résine polyester.

7. Procédé selon l'une quelconque des revendications précédentes, caractérisé en ce que le troisième stade comporte les opérations suivantes:

— monter un joint périphérique (64) sur le panneau de toit (10) fabriqué par moulage d'une mousse de résine polyester;

— préparer une surface du bord (59) de la structure support (2) faisant face au panneau de toit (10) en extrudant un cordon continu d'un promoteur d'adhérence (couche primaire) d'une buse (67) montée sur un bras articulé (68) pouvant se déplacer le long du périmètre de l'ouverture (60);

— extruder un cordon continu d'une substance adhésive d'étanchéité à base de polysulfures sur la surface du bord (59) au moyen de la buse (67) montée sur le bras articulé (68) pouvant se déplacer le long du périmètre de l'ouverture (60);

— appliquer des points d'une substance adhésive à prise rapide sur les points soumis aux plus fortes contraintes du périmètre de l'ouverture;

— monter le panneau de toit (10) sur la structure support (2), une surface (65) du panneau de toit (10) faisant face à l'ouverture étant placée en contact avec le cordon continu de substance adhésive et pressée contre lui avec une pression prédéterminée;

— chauffer la carrosserie (1) à une température prédéterminée relativement basse pour accélérer la polymérisation et la réticulation de la substance adhésive.

8. Procédé selon l'une quelconque des revendications précédentes, caractérisé en ce que le panneau de toit (10) est fabriqué en un matériau du type composite renforcé par des fibres minérales.

9. Procédé selon la revendication 1, caractérisé en ce que les ensembles auto-porteurs (5, 6) comportent des éléments fixés ensemble par soudage haute fréquence.

**Patentansprüche**

1. Verfahren zur Herstellung eines Fahrzeugaufbaues (1) durch Verwendung aus plastischen Kunstharzen bestehender Aussenüberzugselementen und einer monolytischen Fachwerk-Tragstruktur, die aus Stahlblech hergestellt ist und geschlossene Seitenrahmen (11) enthält, die mittels Traversen (12) miteinander verbunden sind, umfassend:

— eine erste Stufe, bei der eine erste Mehrzahl (26), (27, 37, 39, 40) der Ueberzugselemente zusammengebaut und aneinander durch Befestigungsmittel befestigt sind, die zur steifen Verbindung der Elemente (26, 27, 37, 39, 40) miteinander und zur Abdichtung der Verbindungsstellen zwischen denselben zwecks Herstellung an die Tragstruktur (2) befestigbarer selbstragender Baugruppen (4, 5, 6, 25) betätigbar sind;

— eine zweite Stufe, die eine Mehrzahl aufeinanderfolgender Verarbeitungen umfasst, bei welchen die selbstragenden Baugruppen (4, 5, 6, 25) und eine zweite Mehrzahl (3, 7, 8, 9) der genannten Ueberzugselementen auf der Tragstruktur (2) durch mechanische Verbindungsmittel befestigt sind, wobei abdichtende plastische Klebmittel längs der Verbindungsstellen zwischen den genannten Elementen angebracht sind; und

— eine dritte Stufe, während der eine Dachtafel aus plastischem Kunstharz oberhalb einer oberen, in der Tragstruktur (2) vorgesehener Oeffnung (60) mittels einer, längs einer die Oeffnung (60) begrenzenden Kante (59) der Tragstruktur (2) vorgesehenen Wulst aus plastischen Klebmittel befestigt wird, wobei dieses Klebmittel zur elastischen Verbindung der Dachtafel (10) mit der tragstruktur (2) anwendbar ist, um eine fast unabhängige Bewegung derselben zu gestatten;

wobei die plastischen Klebmittel aus Zweibestandteilklebstoffen bestehen, die bei Raumtemperatur polimisier bar sind, und wenigstens einige der Aussenüberzugselemente aus Verbundmaterialstoffen (SMC) bestehen.

2. Verfahren nach Anspruch 1, dadurch gekennzeichnet, dass in der ersten Stufe Seitentüren (5, 6) für den Aufbau (1) des Fahrzeuges, und eine als Trennvorrichtung zwischen der Personenabteilung und der Motorabteilung des Fahrzeuges dienende selbsttragende Tragbaugruppe (25) auf separaten Abschnitten des Fahrzeugaufbaues hergestellt werden, wobei die selbsttragende Tragbaugruppe (25) umfasst ein erstes, aus plastischem Material bestehendes Element (26), das mit Befestigungsmitteln zur dessen Befestigung an die Tragstruktur versehen ist, und ein zweites aus plastischem Material bestehendes Element (27), das an das erste Element mittels eines Polyurethanklebstoffes befestigt ist, wobei das erste Element (26) und das zweite Element (27) mit das Gehäuse für die Teile des Lüftungssystems des Fahrzeuges bildenden Wänden und Sitzen versehen ist; wobei jede Tür (5, 6) ein Paar gegenüberliegender Tafeln aus plastischem Material umfasst, zwischen denen eine einen Fensterhebermechanismus tragende metallische Traverse (55) angeordnet ist, wobei die Traverse mittels mechanischer Glieder an eine der Tafeln befestigt is, wobei diese Tafeln aneinander, um ihre Umfangskante (23) herum, mittels eines Polyurethanklebstoffes befestigt sind, und wobei ein Scharnier (56) an die Traverse (55) angeschraubt ist.

3. Verfahren nach Anspruch 2, dadurch gekennzeichnet, dass das erste und zweite Element (26, 27) aus Polyoxyphenilen (NORIL) geformt sind, wobei die Tafeln aus einem Polyesterharz geformt sind, wobei der Polyurethanklebstoff auf mittels Schmirgeltuch geschliffenen und mittels organischer Lösungsmitteln gereinigten und/oder durch Anbringung von die Haftfähigkeit unterstützender Stoffen (Grundierung) vorbereiteten Oberflächen durch Fliesspressen aufgebracht ist.

4. Verfahren nach irgendeinem der vorangehenden Ansprüche, dadurch gekennzeichnet, dass während der ersten Stufe und auf einem separaten Abschnitt des Aufbaues ein für das Fahrzeug bestimmtes hinteres Endstück (4) hergestellt wird, das ein im wesentlichen rechteckiges Grundteil aufweisendes und aus Polykarbonat hergestelltes tellerföges Element (37) zur Begrenzung eines Kofferraums für das Fahrzeug, zwei aus Polyester bestehendes Seitenflügel (30) und einen hinteren Stossfänger (40) umfasst, wobei die Teile (37, 39, 40) mittels einer durchlaufenden Wulst von Polyurethankleber, die durch Fliesspressen auf mittels organischer Lösungsmitteln gereinigten und durch Anbringung von die Haftfähigkeit unterstützender Stoffen vorbereiteten Oberflächen miteinander verbunden sind, wobei ein schnellwirkender Klebstoff auf die genannten Oberflächen punktweise aufgebracht ist, um eine Zusammenkleben der Elemente (37, 39, 40) in verhältnismässig kurzer Zeit zu erhalten.

5. Verfahren nach irgendeinem der Ansprüche 1 bis 3, dadurch gekennzeichnet, dass während der ersten Stufe ein aus Verbundschaumstoff bestehendes hinteres Endstück (4) des Fahrzeuges hergestellt wird, welches Endstück umfasst ein tellerförmiges, ein im wesentlichen rechteckiges Grundteil aufweisendes Element (37), derart, dass ein Gepäckraum für das Fahrzeug begrenzt wird, zwei Seitenflügel (39) aus Polyesterharz und einen Stossfänger (40), wobei Dichtungen zwischen die Elemente (37, 39, 40) eingelegt werden und die Elemente (37, 39, 40) mittels Schrauben miteinander verbunden werden, wobei danch die Verbindungsstellen zwischen den verschiedenen Elementen mittels eines Polysulfid-Versiegelungsharzes versiegelt werden.

6. Verfahren nach irgendeinem der vorangehenden Ansprüche, dadurch gekennzeichnet, dass die zweite Stufe folgende nacheinander auszuführende Arbeitsgänge umfasst:
— Positionierung der Tragstrukture (2) auf einer mit geeigneten Bezugspunkten und Ansätzen ausgerüstete Plattform;
— Montierung der Tragbaugruppe (25), die zur Trennung zwischen dem Innenraum und dem Motorraum des Fahrzeuges dient;
— Montierung eines vorderen Stossfänger-Endstückes (3) und eines hinteren Endstückes (4) des Fahrzeuges mittels einer automatischen, mit automatischen Schraubern versehenen Station, zu der die Endstücke (3, 4) mittels automatischer Förderanlagen und Positionierungsvorrichtungen;
— Montierung auf die Tragstruktur (2) einer vorderen Motorhaube (8) und einer hinteren Klappe (7) des Fahzeuges, die aus einem Schaumpolyester bzw. aus einem Polyesterharz hergestellt sind, wobei die Motorhaube (8) und die hintere Klappe (7) im voraus mit einer, an die Motorhaube mittels Polyurethanklebstoffen befestigte Lufteinlassvorrichtung (48), bzw. mit an die Tragstruktur (2) mittels automatischer Schrauben angeschraubte Scharniere (47) versehen werden;
— Drehung der genannten Plattform und Montierung, durch Verschraubung, von Seitentüren, und zwar Hintertüren (57) bzw. Vordertüren (6) nacheinander, wobei dei Tragstruktur (2) auf den Seitenrahmen (11) mit durchlaufenden Tragflächen (22) versehen ist, die geeignet sind, Abstützungen für Umfangskanten (23) der Türen (5, 6) zu bilden und mit diesen Umfangskanten abdichtend zusammenzuarbeiten;
— Drehung der Plattform und Montierung, durch Verschraubung, von Vorderflügeln (9) für das Fahrzeug, wobei die Vorderflügeln aus Polyesterharz bestehen.

7. Verfahren nach irgendeinem der vorangehenden Ansprüche, dadurch gekennzeichnet, dass die dritte Stufe folgende Arbeitsgänge umfasst:
— Montierung einer Umfangsdichtung (64) auf die im Pressverfahren aus Polyesterschaumharz hergestellte Tafel (10);
— Vorbereitung einer der Dachtafel (10) gegenüberliegender Oberfläche der Kante (59) der Tragstruktur (2) durch Pressfliessen einer durchlaufenden Wulst aus einem die Haftfähigkeit unterstützendem Stoff aus einer Düse (67), die auf einem gelenkigem Arm (68) angeordnet ist, der oberhalb des Umfanges der Oeffnung (60) bewegbar ist;
— Pressfliessen einer durchlaufenden Wulst aus einem abdichtendem Polysulfidklebstoff auf die Oberfläche der Kante (59) mittels einer Düse (67), die auf einem oberhalb des Umfangs der Oeffnurng (60) bewegbaren Gelenkarm (68) montiert ist;
— punktweise Anbringung eines schnellwirkenden Klebstoffes auf die am stärksten beanspruchten Stellendes Umfanges der Oeffnung;
— Montierung der Dachtafel (10) auf die Tragstruktur (2), wobei eine gegenüber der Oeffnung liegende Oberfläche (65) der Dachtafel (10) in Berührung mit der durchlaufenden Klebstoffwulst gebracht wird und gegen dieselbe mit einem vorbestimmten Druck gedrückt wird;
— Erhitzung des Aufbaues (1) auf eine vorbestimmte verhältnismässig niedrige Temperatur, um die Polimisierung und die Querverbindung des genannten Klebstoffes zu beschleunigen.

8. Verfahren nach irgendeinem der vorangehenden Ansprüche, dadurch gekennzeichnet, dass die Dachtafel (10) aus einem durch Mineralfasern (SMC) verstärktem Verbundmaterial besteht.

9. Verfahren nach Anspruch 1, dadurch gekennzeichnet, dass die selbsttragende Baugruppen (5, 6) Elemente umfasst, die aneinander durch Mikrowellenschweissung befestigt sind.

Fig.1

0 076 934

Fig. 5

Fig. 2

Fig.3

Fig.4

Fig. 6

Fig. 7

0 076 934